# FASCICULE DE BREVET EUROPEEN

(11) **EP 2 463 833 B1**
(45) Date de publication et mention de la délivrance du brevet: **24.07.2013**
(21) Numéro de dépôt: 11192137.5
(22) Date de dépôt: 06.12.2011
(51) Int. Cl.: G07F 7/10

(54) **Procédé et dispositif de contrôle d'exécution pour des fonctions internes et des applications protégées embarquées dans des cartes à microcircuits pour terminaux mobiles**
Verfahren und Vorrichtung zur Ausführungskontrolle für interne Funktionen und Funktionen von geschützten Anwendungen auf Mikrochipkarten von mobilen Endgeräten
Method and device for operational control of internal functions and protected applications embedded in chip cards for mobile terminals

(30) Priorité: 09.12.2010 FR 1060288
(43) Date de publication de la demande: 13.06.2012
(73) Titulaire: Oberthur Technologies, 92700 Colombes (FR)
(72) Inventeur: Raboisson, Aurélien, 92220 Bagneux (FR); Denis, Sylvestre, 78800 Houilles (FR)
(74) Mandataire: Imbert de Tremiolles, Ghislain

(56) Documents cités:
- EP-A1- 0 700 023
- EP-A1- 0 926 638
- WO-A2-2009/141764

## Description

La présente invention concerne l'exécution de fonctions dans des cartes à microcircuits et plus particulièrement un procédé et un dispositif de contrôle d'exécution pour des fonctions internes et des applications protégées embarquées dans des cartes à microcircuits pour terminaux mobiles, notamment des cartes d'identification.

Le développement des terminaux mobiles tels que les téléphones mobiles a entraîné le développement de nombreuses applications qui ne sont pas nécessairement, en elles-mêmes, des applications de téléphonie. Parmi ces applications, il existe notamment des applications de jeu, de gestion d'informations personnelles, de gestion du temps, de porte-monnaie électronique, de paiement, etc.. Une application de paiement ou de porte-monnaie électronique permet de payer un produit ou un service par l'intermédiaire de son terminal mobile.

Selon leur nature, l'accès à ces applications ou à certaines de leurs fonctionnalités peut être contrôlé. Ainsi, par exemple, les applications de paiement, notamment pour le paiement de sommes substantielles, requièrent généralement une identification de l'utilisateur. Une telle identification peut être réalisée à partir d'une carte d'identification si le terminal mobile utilisé pour exécuter l'application en dispose.

Il existe notamment des cartes d'identification connue sous les noms de cartes SIM (acronyme de *Subscriber Identity Module* en terminologie anglo-saxonne), cartes USIM (acronyme d*'Universal Subscriber Identity Module* en terminologie anglo-saxonne), cartes UICC (acronyme de *UMTS Integrated Circuit Card* en terminologie anglo-saxonne, UMTS étant le sigle d'*Universal Mobile Telecommunications System* en terminologie anglo-saxonne) et cartes RUIM (acronyme de *Removable Universal Identity Module* en terminologie anglo-saxonne).

Ces cartes comprennent généralement des moyens de traitement de données et des moyens de mémorisation de données pour le stockage des informations spécifiques à un utilisateur d'un réseau de téléphonie mobile. La présence d'une telle carte au sein d'un terminal mobile, en particulier d'un téléphone mobile, permet à ce terminal, grâce aux informations contenues dans la carte d'identification, de se connecter au réseau et d'échanger des données avec d'autres terminaux du réseau, notamment de manière sécurisée (la carte contient par exemple une clé cryptographique permettant de s'authentifier auprès du réseau et de chiffrer des échanges de données).

Les cartes d'identification forment un élément sécurisé des terminaux mobiles permettant une authentification des utilisateurs de ces cartes grâce à des clefs d'authentification mémorisées, par exemple, dans les moyens de mémorisation de ces cartes.

Par ailleurs, certains terminaux mobiles disposent de moyens de communication sans fil à faible portée, par exemple de type NFC (sigle de *Near Field Communication* en terminologie anglo-saxonne). Les terminaux mobiles comprennent alors une antenne de communication à champ proche. Cette antenne peut également être intégrée dans une carte amovible du terminal. Elle permet l'échange de données entre le terminal mobile et un équipement externe tel qu'une borne de paiement.

Ainsi, il est possible, à l'aide d'un terminal mobile, d'effectuer un paiement par communication sans contact. Une telle communication est, par exemple, conforme à la norme ISO 14 443 qui vise un format de carte d'identification et un protocole de communication associé.

Pour utiliser ce type de services ou pour échanger des informations, l'utilisateur approche son terminal mobile de la borne, de telle sorte qu'une transaction par communication en champ proche puisse être réalisée.

En outre, une sélection d'applications bancaires peut être activée dans la carte d'identification du terminal mobile utilisé, par exemple par le microcontrôleur d'une carte SIM. L'activation de cette sélection d'applications est par exemple commandée par le terminal mobile conformément à la norme ISO 7816 relative aux cartes d'identification à contacts. L'utilisateur peut alors choisir l'une des applications bancaires sélectionnées.

Comme indiqué précédemment et afin de sécuriser une opération effectuée par l'application choisie, une authentification de l'utilisateur peut être effectuée. Celle-ci peut notamment consister à demander un mot de passe à l'utilisateur, par exemple son code PIN (acronyme de *Personal Identification Number* en terminologie anglo-saxonne), via une interface graphique du terminal mobile. Le code PIN utilisé ici est généralement différent du code PIN utilisé pour accéder aux fonctions de téléphonie. Après que l'utilisateur l'ait entré, par exemple à l'aide d'un clavier, réel ou virtuel (utilisant par exemple un écran tactile), ce mot de passe est transmis à la carte d'identification, par exemple selon la norme ISO 7816, qui le compare à un code stocké dans une mémoire non volatile de la carte d'identification. Si ce mot de passe et ce code coïncident, l'opération est autorisée, dans le cas contraire, elle est rejetée.

Pour des raisons de sécurité, le mot de passe entré par l'utilisateur a généralement une durée limitée. Ainsi, si l'opération visée n'a pas été effectuée dans le délai fixé, le code expire. Un tel délai est généralement prédéterminé, sa valeur est typiquement d'une minute. Si le délai a expiré et que l'utilisateur souhaite néanmoins effectuer l'opération visée, il doit ressaisir le mot de passe.

Bien qu'un tel système permette de limiter les risques de fraude, il existe néanmoins un besoin constant d'améliorer la sécurité liée à l'exécution de certaines opérations effectuées à partir d'un terminal mobile, notamment de transactions.

L'invention permet de résoudre au moins un des problèmes exposés précédemment.

L'invention a ainsi pour objet un procédé de contrôle d'exécution d'au moins une fonction interne protégée embarquée dans un dispositif à microcircuits adapté à être utilisé en coopération avec un terminal mobile, ce procédé, mis en oeuvre dans ledit dispositif à microcircuits, comprenant les étapes suivantes,
- détection d'une commande de mise en veille dudit dispositif à microcircuits, ladite commande de mise en veille étant détectée à partir d'une information reçue d'un terminal mobile dans lequel est connecté ledit dispositif à microcircuits ;
- analyse d'au moins une indication relative à l'exécution de ladite au moins une fonction interne protégée ; et,
- si ladite au moins une fonction interne protégée est susceptible d'être affectée par l'exécution de ladite commande de mise en veille, exécution différée de ladite commande de mise en veille.

Le procédé selon l'invention permet ainsi de protéger l'intégrité d'un dispositif à microcircuits tel qu'une carte à microcircuits et d'assurer la protection d'applications protégées exécutées par ce dispositif en différant, si nécessaire, l'exécution de commandes de mise en veille du dispositif. A ces fins, une commande de mise en veille est différée en fonction de l'exécution de fonctions internes protégées, par exemple de fonctions de décompte pouvant être utilisées pour déterminer la validité d'un mot de passe ou de fonctions de gestion de mémoires du dispositif à microcircuits.

Selon un mode de réalisation particulier, le procédé comprend en outre les étapes suivantes,
- mise à une première valeur d'une variable d'état lors du lancement de ladite au moins une fonction interne protégée ; et,
- mise à une seconde valeur de ladite variable d'état lorsque l'exécution de ladite au moins une fonction interne protégée est terminée ou lorsque ladite fonction interne protégée est réinitialisée ;
ladite étape d'analyse comprenant une étape d'analyse de la valeur de ladite variable d'état.

Selon ce mode de réalisation, une variable d'état est utilisée comme moyen d'échange d'informations entre des fonctions internes protégées et un module de gestion de mise en veille du dispositif, ce module pouvant, en fonction de la valeur de cette variable, c'est-à-dire en fonction de l'exécution de fonctions internes protégées, différer ou non l'exécution d'une commande de mise en veille.

Selon un autre mode de réalisation, l'exécution de ladite commande de mise en veille est directement contrôlée par ladite au moins une fonction interne protégée. Il n'est alors pas nécessaire d'utiliser de variable d'état à ces fins.

De façon avantageuse, le procédé comprend en outre une étape de comparaison d'un niveau de veille demandé associé à ladite commande de mise en veille avec un état de veille dudit dispositif à microcircuits. Ainsi, selon les valeurs relatives des niveaux de veille demandé et réel, il peut être déterminé s'il est nécessaire ou non de vérifier si l'exécution d'une commande de mise en veille doit être différée ou non.

Toujours selon un mode de réalisation particulier, Idit dispositif à microcircuits ou ledit terminal mobile étant pourvu de moyens de communication sans fil à faible portée et ledit dispositif à microcircuit comprenant une application protégée embarquée faisant appel auxdits moyens de communication sans fil à faible portée et à ladite fonction interne protégée, le procédé comprend en outre les étapes suivantes,
- réception d'une donnée d'authentification pour l'exécution de ladite application protégée, ladite donnée d'authentification étant reçue dudit terminal mobile ;
- comparaison de ladite donnée d'authentification reçue avec au moins une donnée stockée dans ledit dispositif à microcircuits ;
- si ladite donnée d'authentification reçue correspond à ladite au moins une donnée stockée et si ladite application protégée est appelée, vérification de la validité de ladite donnée d'authentification reçue selon au moins un critère défini dynamiquement dans ledit dispositif à microcircuits ; et,
- si ladite donnée d'authentification reçue est valide, exécution de ladite application protégée.

Le procédé selon l'invention permet ainsi de déterminer la validité d'un mot de passe saisi par un utilisateur, sans recourir à des moyens du terminal mobile dans lequel est utilisé le dispositif à microcircuits. Le procédé selon l'invention permet ainsi d'améliorer la sécurité liée à l'utilisation d'un mot de passe.

De façon avantageuse, ladite fonction interne protégée est une fonction de décompte, le procédé comprenant en outre, si ladite donnée d'authentification reçue correspond à ladite au moins une donnée stockée, une étape d'appel à ladite fonction de décompte pour un délai d'une durée prédéterminée, ladite étape de vérification comprenant la vérification que ledit délai n'est pas écoulé. La validité d'un mot de passe est ainsi limitée dans le temps, le décompte du temps étant effectué de façon sécurisée dans le dispositif à microcircuits. Ladite fonction de décompte est, de préférence, basée sur une horloge matérielle dudit dispositif à microcircuits.

Toujours selon un mode de réalisation particulier, le procédé comprend en outre les étapes suivantes,
- réception d'au moins une information dudit terminal mobile auquel est connectée ledit dispositif à microcircuits pour informer qu'au moins une borne d'accès sans contact est accessible via lesdits moyens de communication sans fil à faible portée ;
- sélection d'au moins ladite application protégée embarquée dans ledit dispositif à microcircuits en réponse à ladite au moins une information reçue et transmission d'au moins une référence à ladite au moins application sélectionnée audit terminal mobile ; et,
- réception d'au moins un identifiant d'une application, ledit identifiant correspondant à une référence à ladite application protégée embarquée.

Le procédé permet ainsi la mise en oeuvre simple et sécurisée d'applications telles que des applications de paiement.

L'invention a également pour objet un programme d'ordinateur comprenant des instructions adaptées à la mise en oeuvre de chacune des étapes du procédé décrit précédemment lorsque ledit programme est exécuté sur un ordinateur.

L'invention a aussi pour objet un dispositif comprenant des moyens tels qu'un microcontrôleur adaptés à la mise en oeuvre de chacune des étapes du procédé décrit précédemment ainsi qu'une carte d'identification d'un souscripteur à un réseau de téléphonie mobile comprenant un tel dispositif et un terminal mobile intégrant un tel dispositif.

Selon un mode de réalisation particulier, le dispositif comprend en outre au moins une mémoire configurée pour mémoriser au moins une donnée relative à ladite au moins une fonction interne protégée. Toujours selon un mode de réalisation particulier, le microcontrôleur est en outre configuré pour exécuter un algorithme de cryptographie protégeant ladite au moins une donnée relative à ladite au moins une fonction interne protégée et/ou pour exécuter un algorithme de protection matérielle d'au moins un composant dudit dispositif afin d'améliorer la protection de ladite au moins une fonction interne.

Les avantages procurés par ce programme d'ordinateur, ce dispositif et cette carte d'identification sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 représente schématiquement un terminal mobile et une carte à microcircuit associée permettant la mise en oeuvre de l'invention ;
- la figure 2 illustre certaines étapes mises en oeuvre dans un terminal mobile conformément à l'invention ;
- la figure 3 illustre certaines étapes mises en oeuvre dans une carte à microcircuit conformément à l'invention ; et,
- la figure 4 illustre certaines étapes d'un exemple d'algorithme d'un module de gestion de mise en veille, conformément à l'invention.

Il a été observé que la sécurité liée à l'exécution de certaines opérations effectuées par un terminal mobile en conjonction avec une carte à microcircuits présente des faiblesses en ce qu'une partie du mécanisme de sécurité est mis en oeuvre dans le terminal mobile et que ce dernier ne peut être considéré comme une zone d'exécution sécurisée.

En particulier, il a été observé qu'en raison des spécifications des opérateurs mobiles et bancaires, les terminaux mobiles mettent en oeuvre des applications intermédiaires. Ces dernières sont notamment utilisées pour calculer le délai d'expiration d'un mot de passe entré par un utilisateur. Elles peuvent être implémentées sous forme de *midlet,* c'est-à-dire d'un ensemble d'API (sigle *d'Application Program Interface* en terminologie anglo-saxonne) Java définissant la façon dont des applications exécutées dans une carte insérée dans un terminal mobile se connectent à l'interface de terminal. De même, un mot de passe peut être valide pour un nombre d'utilisations donné.

En d'autres termes, des applications protégées devant être exécutées par l'intermédiaire d'un terminal mobile ont une sécurité relative. A titre d'illustration, la commande d'invalidation d'un mot de passe à l'issue d'un délai d'expiration est une fonction mise en oeuvre sur un terminal mobile et dont le résultat est typiquement transmis de façon non sécurisée à une carte à microcircuits, par exemple une carte SIM. Les midlets mettant en oeuvre ces fonctions ne sont pas certifiées, notamment par des autorités bancaires. Ces fonctions peuvent donc être la cible d'attaques frauduleuses et leurs résultats peuvent être interceptés.

En outre, des midlets peuvent être défaillantes, ce qui peut conduire à ce qu'un mot de passe soit valide durant une période importante. Ainsi, par exemple, lorsqu'un utilisateur doit entrer un mot de passe pour effectuer des transactions supérieures à une somme donnée, il peut effectuer des transactions supérieures à cette somme sans s'en rendre compte si le mécanisme d'expiration du mot de passe est défaillant.

Par ailleurs, il est observé que les cartes à microcircuits sont généralement pourvues d'un mode, appelé mode veille, permettant d'inhiber, partiellement ou totalement, des fonctions de ces cartes. Un tel mode a pour objet de réduire la consommation électrique de la carte à microcircuits afin de préserver la charge de la batterie du terminal mobile dans lequel est utilisée la carte à microcircuits (une carte à microcircuits étant typiquement alimentée électriquement par le terminal mobile auquel elle est connectée). Ainsi, en d'autres termes, il existe un état actif dans lequel une carte à microcircuits peut être utilisée « normalement », un ou plusieurs états de veille selon lesquels seules certaines fonctions de la carte peuvent être utilisées et un état arrêté dans lequel aucune fonction ne peut être utilisée. Pour passer dans un état actif ou de veille à partir de l'état arrêté, il faut généralement démarrer la carte, ce qui prend un temps généralement non négligeable. L'état d'une carte à microcircuits est, selon les normes courantes, contrôlé par le terminal mobile dans lequel la carte est utilisée. Ainsi, par exemple, la fonction d'un terminal mobile pour mettre en veille une carte à microcircuits, plus précisément pour arrêter son horloge interne est, selon la norme ISO 7816, « *clockstop* » qui a pour effet d'arrêter le signal d'horloge transmis par le terminal mobile à la carte à microcircuits. Lorsque la carte à microcircuits détecte l'arrêt du signal d'horloge, elle se met en veille.

L'invention vise la mise en oeuvre de fonctions internes protégées, notamment de fonctions de sécurité, par exemple des fonctions de calcul d'un délai d'expiration d'un mot de passe ou, plus généralement, d'une donnée d'authentification entré par un utilisateur, dans une carte à microcircuits, par exemple une carte SIM, UICC, UMTS ou RUIM, configurée pour être utilisée en coopération avec un terminal mobile. Ainsi, conformément à l'invention, la validité d'une donnée d'authentification d'un utilisateur est effectuée selon un critère défini dynamiquement dans la carte d'identification. Ce critère est typiquement une durée de validité et/ou un nombre d'utilisations. L'invention vise également la mise en oeuvre d'autres fonctions protégées telles que des fonctions de gestion de mémoire.

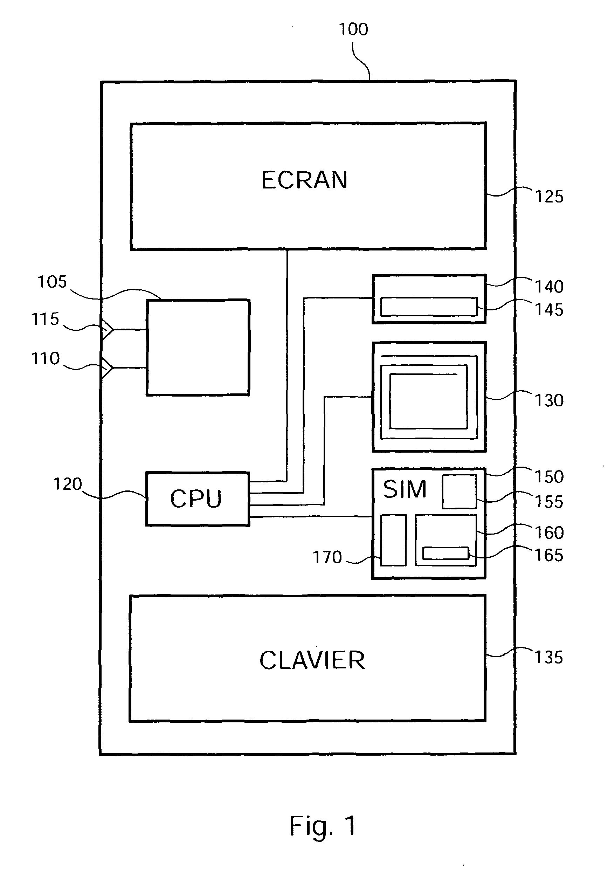

La figure 1 représente un terminal mobile 100 apte à mettre en oeuvre l'invention. Comme illustré, le terminal mobile 100 comprend un module 105 de téléphonie mobile, avantageusement relié à un haut-parleur 110 et à un microphone 115. Le module de téléphonie mobile est relié à une antenne (non représentée) du terminal mobile 100 pour communiquer avec le réseau de téléphonie mobile Le terminal mobile 100 comprend également une unité centrale de traitement 120, aussi appelée CPU (sigle de *Central Processing Unit* en terminologie anglo-saxonne) et, de préférence, un écran 125.

Le terminal mobile 100 comprend en outre un module 130 de communication à faible portée, avantageusement un module de communication sans fil à faible portée. Le module 130 est par exemple du type NFC. Le module 130 peut être directement implanté dans le terminal mobile 100, par exemple sous forme de circuit intégré et d'antenne, ou inséré dans le terminal mobile 100, par exemple, sous forme de carte à microcircuits comprenant une antenne intégrée.

Le terminal mobile comprend également un dispositif de saisie 135, tel qu'un clavier ou un dispositif équivalent, pour saisir des caractères, des valeurs et/ou des commandes. Le dispositif de saisie 135 forme, en coopération avec l'écran 125, une interface utilisateur. Le dispositif de saisie 135 peut également être intégré à l'écran 125 sous forme d'écran tactile.

Le terminal mobile 100 comprend aussi un module mémoire 140 adapté à mémoriser au moins des applications et/ou des interfaces logicielles 145 utilisées entre le terminal mobile 100 et certains de ces composants, fixes ou amovibles, tels que le module 130 et une carte à microcircuits connectée à ce terminal mobile, par exemple la carte d'identification 150.

La carte d'identification 150 est ici une carte SIM pourvue d'un microcontrôleur 155, d'une première mémoire 160 et d'une seconde mémoire 170. La première mémoire 160 est ici utilisée pour stocker des applications telles que des applications de l'utilisateur, de son opérateur et des applications bancaires. Une partie 165 de cette mémoire est en outre utilisée pour stocker des informations, des paramètres et/ou des informations de l'utilisateur pour lui permettre d'accéder à un réseau de téléphonie mobile, en particulier un code de type PIN. La première mémoire 160 est typiquement une mémoire de type flash. La seconde mémoire 170 est ici une mémoire de type ROM (acronyme de *Read Only Memory* en terminologie anglo-saxonne). Elle est notamment utilisée pour stocker le système d'exploitation de la carte d'identification ainsi que des fonctions d'interface.

Selon un mode de réalisation particulier, le module 130 de communication à faible portée peut être intégré, partiellement ou totalement, à la carte d'identification 150.

La carte d'identification 150 est, de préférence, amovible et sécurisée.

L'invention vise un mécanisme mis en oeuvre directement dans une carte à microcircuit, c'est-à-dire, de façon générale, un dispositif à microcircuits, par exemple dans la carte SIM 150, pour contrôler l'exécution de fonctions internes protégées, relativement à l'état de la carte, notamment de fonctions internes appelées par des applications protégées. Le dispositif à microcircuits, comprenant par exemple le microcontrôleur 155 et les mémoires 160 et 170, peut être intégré au terminal mobile.

Selon un mode de réalisation particulier, l'invention à pour objet un mécanisme pour gérer dynamiquement la validité d'un mot de passe saisi par un utilisateur à l'aide de moyens de saisie tels que le clavier 135. Ce mécanisme peut notamment consister à contrôler la durée de validité du mot de passe et/ou à tester le nombre d'exécutions d'une application protégées utilisant un même mot de passe entré. Un tel mécanisme interne à la carte à microcircuits est moins sensible aux attaques qu'un mécanisme similaire mis en oeuvre dans un terminal mobile car l'environnement d'une carte à microcircuits est généralement plus sécurisé que l'environnement du terminal mobile. En outre, un tel mécanisme peut plus facilement être certifié, par exemple par une autorité bancaire.

De façon avantageuse, ce mécanisme utilise une fonction interne de la carte à microcircuits, généralement appelée *timer* en terminologie anglo-saxonne. Un *timer est* typiquement défini comme étant une fonction, matérielle ou logicielle, chargée de générer une interruption après un nombre de tops d'horloge pour activer ou exécuter une autre fonction, typiquement du code logiciel. Ce nombre de tops d'horloge et l'horloge devant être utilisée (par exemple l'horloge de la carte à microcircuits) sont généralement fournis à la fonction comme paramètres.

Conformément à l'invention, une interface (API) est, par exemple, ajoutée au système d'exploitation utilisé au sein de la carte à microcircuits pour offrir des fonctions internes de contrôle de validité d'un mot de passe reçu du terminal mobile auquel est connectée la carte. Ces fonctions permettent notamment de décompter une durée prédéfinie de validité d'un mot de passe. L'interface ajoutée ici consiste par exemple en un service fourni par le système d'exploitation de la carte SIM à une application bancaire, par exemple une application de type *cardlet.* Un tel service est par exemple appelé dès qu'un mot de passe reçu est considéré comme correct, c'est-à-dire lorsqu'il correspond à une donnée d'authentification préalablement mémorisée.

Pour contrôler une durée prédéfinie de validité d'un mot de passe, l'horloge matérielle de la carte à microcircuits est, de préférence utilisée. La fonction *timer* utilisant une telle horloge, aussi appelée *hardware timer* en terminologie anglo-saxonne, peut être considérée comme une extension matérielle du système d'exploitation de la carte à microcircuits, le système d'exploitation étant généralement logiciel. Cette fonction *hardware timer,* généralement existante au sein des cartes SIM, plus précisément au sein du microcontrôleur, offre l'avantage d'être couramment certifiée, par les fabricants, selon les critères communs connus sous le nom d'EAL4+.

En variante, une fonction logicielle *timer* (appelée *software timer* en terminologie anglo-saxonne) peut être utilisée. L'horloge utilisée à ces fins peut être générée à partir de l'horloge matérielle de la carte à microcircuits ou à partir d'une horloge du terminal mobile. Une fonction logicielle *timer* n'est généralement par certifiée par les fabricants.

Selon un mode de réalisation préféré, la carte à microcircuits comprend au moins deux niveaux de veille. Un premier niveau correspond à une veille totale selon laquelle l'ensemble de ses composants est en veille (il s'agit donc d'un mode veille standard). Un second niveau correspond à une veille partielle selon laquelle certaines fonctions sont actives. Ainsi, par exemple, la fonction de décompte d'une durée prédéfinie de validité d'un mot de passe peut rester active dans ce niveau de veille. En d'autres termes, dans le mode veille partielle, la fonction *timer* (*software timer* ou *hardware timer*) est ici active.

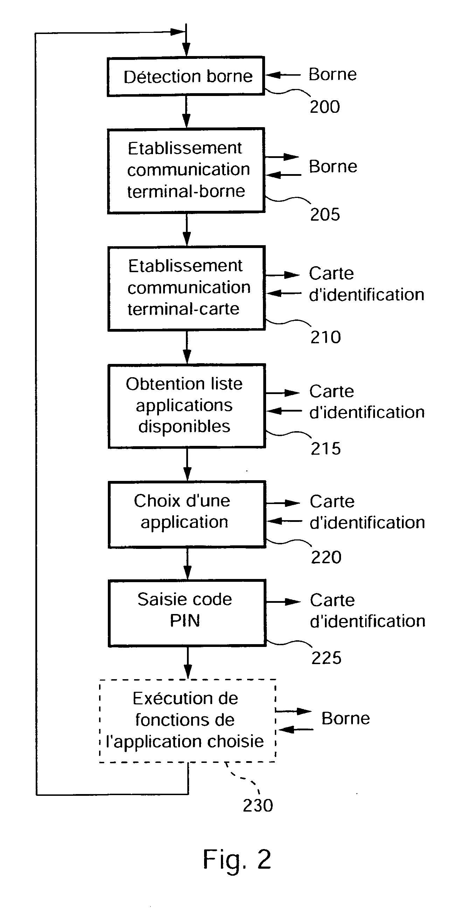

La figure 2 illustre certaines étapes mises en oeuvre dans un terminal mobile conformément à l'invention.

Une première étape (étape 200) a pour objet la détection d'une borne, par exemple une borne de paiement d'un objet ou d'un service, tel que l'accès à un musée. Selon la configuration du module de communication sans fil à faible portée utilisé, cette étape peut être réalisée automatiquement par détection d'un signal ou en réponse à une commande de l'utilisateur réalisée via une interface du terminal mobile utilisé.

Dans une étape suivante (étape 205), un canal de communication est établi entre le terminal mobile et la borne préalablement détectée. Ce canal de communication est ici établi selon un protocole standard, par exemple un protocole conforme à la norme ISO 14 443. Parallèlement, de façon simultanée ou précédemment, un canal de communication est établi entre le terminal mobile utilisé et une carte à microcircuits contenue dans ce dernier (étape 210). A nouveau, ce canal de communication est de préférence établi selon un protocole standard, par exemple un protocole conforme à la norme ISO 7816.

Ensuite, une information relative à la borne détectée est transmise à la carte à microcircuits pour lui permettre de sélectionner des applications contenues dans cette dernière et pouvant être exécutées. La sélection d'applications est, de préférence, basée sur le type de borne détecté. Une référence à ces applications sélectionnées est transmise au terminal mobile, par exemple sous forme de liste (étape 215). Il s'agit, par exemple, d'applications bancaires.

La liste des applications sélectionnées peut être affichée sur le terminal mobile afin de permettre à l'utilisateur d'en choisir une (étape 220). Une référence de l'application choisie est alors transmise à la carte à microcircuits qui, le cas échéant, indique au terminal mobile qu'un mot de passe doit être saisi par l'utilisateur. Dans ce cas, l'utilisateur entre un mot de passe à l'aide, par exemple, d'un clavier ou d'un dispositif similaire lié au terminal mobile (étape 225). Ce mot de passe est alors transmis à la carte à microcircuits, par exemple selon la norme ISO 7816, qui le vérifie et lance l'exécution de l'application choisie, c'est-à-dire de fonctions de cette application. Ces fonctions peuvent être identifiées par l'application choisie elle-même ou être sélectionnées par l'utilisateur. Il peut notamment s'agir d'un ordre de paiement dont le montant peut être saisi par l'utilisateur ou transmis par la borne lors de l'établissement de la communication entre le terminal mobile et la borne.

Lors de l'exécution de ces fonctions (étape 230), le terminal mobile est généralement sollicité comme interface entre la carte à microcircuits et le module de communication sans fil à faible portée du terminal mobile.

Comme illustré, le procédé peut être répété tant qu'il n'y est pas mis fin (de façon automatique ou par l'utilisateur).

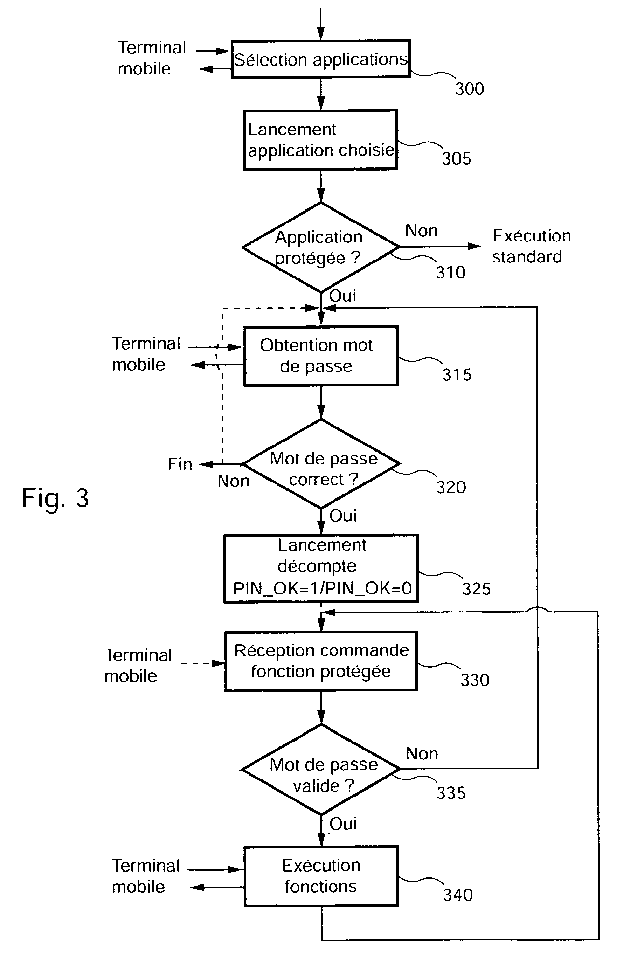

La figure 3 illustre certaines étapes mises en oeuvre dans une carte à microcircuits, par exemple une carte SIM, conformément à l'invention.

Une première étape (étape 300) vise ici la sélection d'applications contenues dans la carte d'identification. Comme décrit précédemment, une telle sélection est, de préférence, effectuée selon des caractéristiques d'une borne avec laquelle le terminal mobile comprenant la carte à microcircuits a établi un canal de communication. De telles caractéristiques peuvent ainsi viser des indications relatives au paiement d'une somme ou à la recharge d'un porte-monnaie électronique ou d'un forfait de communication.

Des références aux applications sélectionnées sont alors transmises au terminal mobile, par exemple sous forme d'une liste. Lorsqu'une telle liste est reçue par le terminal mobile, elle est de préférence affichée de telle sorte que l'utilisateur puisse en choisir une. Lorsqu'une application a été choisie, une référence à celle-ci est transmise à la carte à microcircuits, plus précisément au microcontrôleur de la carte à microcircuits, pour lui permettre de lancer l'application correspondante (étape 305).

Alternativement, si une seule application est susceptible d'être exécutée ou en fonction de paramètre de configuration, une application peut être directement lancée sans qu'elle ait été explicitement choisie par l'utilisateur.

Lors du lancement d'une application, un test est effectué pour déterminer si l'application est protégée, c'est-à-dire si l'exécution de cette application ou de certaines de ses fonctions requiert l'authentification de l'utilisateur (étape 310). Dans la négative, l'application est exécutée de façon classique par le microcontrôleur de la carte à microcircuits.

Dans le cas contraire, si l'application est protégée, une instruction est ici transmise au terminal mobile afin d'obtenir un mot de passe permettant de débloquer l'application par authentification. Ce dernier est, de préférence, entré par l'utilisateur, à l'aide d'un clavier ou d'un dispositif similaire lié au terminal mobile puis transmis à la carte à microcircuits.

Il est observé ici que des données liées à la ou aux fonctions protégées, mémorisées dans des mémoires de la carte à microcircuits, par exemple la mémoire 160 et/ou la mémoire 170 décrites en référence à la figure 1, peuvent être protégées à l'aide d'algorithmes de cryptographie respectant la norme FIPS (acronyme de *Federal Information Processing Standards* en terminologie anglo-saxonne).

De façon similaire, des composants de la carte à microcircuits tels que le microcontrôleur 155 et les mémoires 160 et 170 décrits en référence à la figure 1, dans lesquelles sont mémorisées des données relatives à la ou aux fonctions protégées, peuvent être protégés matériellement contre des attaques dites non invasives (par exemple des attaques par analyse de temps, analyse de consommation, analyse électromagnétique et/ou attaques d'horloges), invasives ou semi-invasives.

Après avoir obtenu un mot de passe (étape 315), un test est effectué pour déterminer si le mot de passe reçu est correct (étape 320). A ces fins, le microcontrôleur de la carte à microcircuits, ou un module cryptographique lié à ce microcontrôleur, compare le mot de passe reçu à une donnée préalablement mémorisée. Une telle comparaison peut notamment être réalisée selon des algorithmes d'authentification et de cryptographie standard.

Alternativement, d'autres modes d'authentification tels que la reconnaissance d'empreintes digitales peuvent être utilisés.

Si le mot de passe n'est pas correct, il est mis fin au processus ou une instruction est transmise au terminal mobile pour inviter l'utilisateur à ressaisir un mot de passe (comme indiqué par l'utilisation d'une flèche en trait pointillé).

Au contraire, si le mot de passe est correct, une fonction de décompte du temps, c'est-à-dire une fonction interne protégée, est activée (étape 325). Comme décrit précédemment, cette fonction a pour objet d'identifier un intervalle de temps dans lequel le mot de passe reçu est considéré comme valide. La durée de cet intervalle de temps est, de préférence, prédéterminée. La fonction de décompte est basée sur une horloge de la carte à microcircuits ou, alternativement, sur une horloge du terminal mobile.

Alternativement, la fonction de décompte peut être lancée avant de vérifier le mot de passe, la fonction de décompte étant arrêtée si le mot de passe n'est pas correct.

La fonction de décompte est typiquement basée sur la fonction *timer* (de préférence la fonction *hardware timer*) décrite précédemment. Cette dernière est appelée avec, comme paramètres, la durée de validité du mot de passe et l'horloge devant être utilisée. A l'expiration du *timer,* c'est-à-dire à la fin de l'exécution de la fonction *timer,* une interruption est générée. Elle indique à la fonction de décompte que celle-ci est terminée. La fonction de décompte peut également être assimilée à la fonction *timer.*

Selon un mode de réalisation particulier, une première indication est transmise au système d'exploitation de la carte à microcircuits, ou plus généralement à un module de gestion de mise en veille, lorsque la fonction de décompte est activée. De même, une seconde indication est transmise au système d'exploitation de la carte d'identification, ou plus généralement à un module de gestion de mise en veille, lorsque la fonction de décompte est réinitialisée ou que le décompte est terminé. Ainsi, connaissant l'état de la fonction de décompte, le système d'exploitation, ou plus généralement à un module de gestion de mise en veille, peut interdire l'état de veille totale de la carte d'identification lorsque la fonction de décompte est active. En d'autres termes, seul un état actif ou un état de veille partielle selon lequel l'horloge de la carte à microcircuits est active peut être utilisé lorsque la fonction de décompte est active (lorsque l'horloge de la carte d'identification est utilisée). Si la fonction de décompte est basée sur une horloge du terminal mobile, l'état de veille partielle est un état selon lequel la fonction de décompte est opérationnelle sans que l'horloge de la carte d'identification soit nécessairement active.

Alternativement, il peut être interdit de changer l'état de la carte d'identification lorsque la fonction de décompte est active. Ainsi, de façon avantageuse, une variable d'état, de préférence mémorisée dans une mémoire volatile, par exemple la variable d'état *PIN_OK,* est mise à une première valeur lorsque la fonction de décompte est activée (par exemple, *PIN_OK=1*)*.* Cette variable d'état est mise à une seconde valeur lorsque la fonction de décompte est réinitialisée ou que le décompte est terminé (par exemple, *PIN_OK=0*)*.* Alternativement, cette variable d'état peut être directement mise à cette seconde valeur lorsque la fonction *timer émet* une interruption (lorsque le *timer* expire), la fonction de décompte étant alors désactivée lorsque la variable d'état est mise à cette seconde valeur. Dans ce cas, l'interruption générée par la fonction *timer* déclenche une fonction, de préférence logicielle, de mise à jour de la variable d'état *PIN_OK.*

Ensuite, lorsqu'une commande visant une fonction de l'application protégée exécutée est traitée par le microcontrôleur de la carte à microcircuits, un test est effectué pour déterminer si le mot de passe reçu est valide (étape 335). Il est observé ici qu'une commande visant une fonction de l'application protégée exécutée peut être directement liée à cette dernière (elle est, dans ce cas, automatiquement reçue) peut résulter d'un choix de l'utilisateur (la commande est alors reçue via l'unité centrale de traitement 120 par l'intermédiaire d'une instruction issue du terminal mobile, comme illustré par la flèche en trait pointillé) ou peut provenir de la borne à laquelle est connecté le terminal mobile (la commande est alors reçue via le module 130, comme illustré par la flèche en trait pointillé).

Pour déterminer si un mot de passe est valide, le microcontrôleur de la carte à microcircuits fait ici appel à la fonction de décompte du temps lancée précédemment. Ainsi, si le délai est écoulé, le mot de passe est considéré comme non valide. En outre, selon un mode de réalisation particulier, le nombre d'exécutions de l'application protégée (ou de fonctions de cette application) depuis la saisie du mot de passe peut être comparé à un nombre d'utilisations prédéterminé. Il est ainsi possible de limiter l'utilisation d'un mot de passe à une seule commande, deux commandes, etc..

Si le mot de passe n'est pas valide, une instruction est transmise au terminal mobile pour inviter l'utilisateur à ressaisir un mot de passe (l'algorithme retourne à l'étape 315 décrite précédemment).

Si, au contraire, le mot de passe est considéré comme valide, la commande considérée est traitée et la fonction correspondante est exécutée (étape 340). Comme indiqué précédemment, l'exécution de cette fonction peut faire appel au terminal mobile, notamment pour solliciter le module de communication sans fil à faible portée utilisé. Selon un mode de réalisation particulier selon lequel un mot de passe ne peut être utilisé que pour l'exécution d'une seule fonction, la fonction de décompte du temps est réinitialisée (pour l'arrêter). De la sorte, si une nouvelle commande protégée doit être exécutée, le mot de passe sera considéré comme non valide sans qu'il soit nécessaire de comparer le nombre de commandes exécutées depuis la réception de ce mot de passe à un nombre d'utilisations prédéterminé.

Il est observé ici que des applications peuvent être protégées en ce que l'exécution de certaines de leurs fonctions est soumise à certaines contraintes, notamment l'authentification de l'utilisateur, comme décrit précédemment. Cependant, une application peut également être protégée de façon globale, c'est-à-dire que lorsque l'exécution de l'application a été autorisée (après authentification de l'utilisateur), il n'est pas besoin d'authentifier l'utilisateur pour exécuter ses fonctions. Néanmoins, lorsque cette application fait appel à une autre application protégée, il peut être nécessaire de ré-authentifier l'utilisateur pour exécuter cette autre application.

Lorsque la carte à microcircuits détecte une commande de mise en veille et si le niveau de mise en veille est tel qu'il est susceptible d'affecter l'exécution de l'application protégée, notamment la fonction interne de décompte, un test est effectué pour déterminer si la commande de mise en veille peut être exécutée ou si son exécution doit être différée. A ces fins, un module de gestion de mise en veille est, de préférence, mis en oeuvre dans la carte à microcircuits. Il peut s'agir d'un module matériel ou d'un module logiciel. Il peut notamment être intégré au système d'exploitation de la carte à microcircuits. Si une variable d'état, par exemple la variable d'état *PIN_OK,* de préférence mémorisée en mémoire volatile, est utilisée, le module de gestion de mise en veille détermine la valeur de la variable d'état et, en fonction de cette valeur, autorise ou non la mise dans l'état de veille demandé.

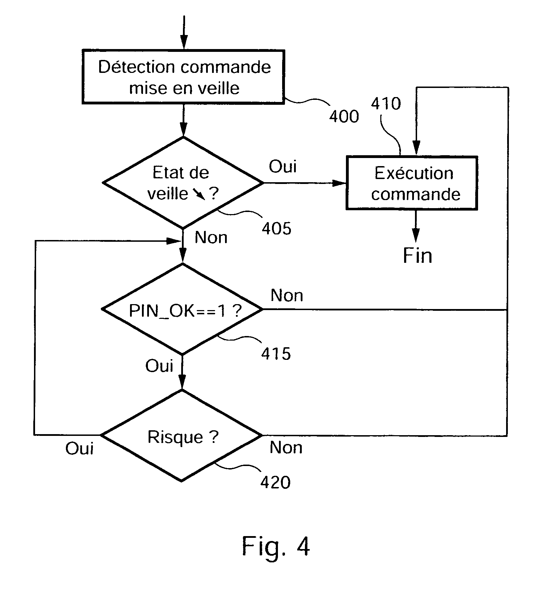

La figure 4 illustre certaines étapes d'un exemple d'algorithme d'un module de gestion de mise en veille, conformément à l'invention. Comme illustré, une première étape (étape 400) a pour objet la détection d'une commande de mise en veille de la carte à microcircuits comprenant ce module. Conformément à la norme ISO 7816, cette commande est détectée à partir du signal d'horloge provenant du terminal mobile dans lequel la carte à microcircuit est utilisée, lorsque le signal d'horloge est arrêté.

Dans une étape suivante, le module de gestion de mise en veille détermine si l'état de veille demandé, associé à la commande de mise en veille, est inférieur à l'état de veille actuel (étape 405), c'est-à-dire si l'état de veille demandé vise l'activation de certaines fonctions de la carte à microcircuits (l'état de veille demandé est, dans ce cas, inférieur ou égal à l'état de veille actuel) ou si, au contraire, l'état de veille demandé vise l'inhibition de certaines fonctions de la carte à microcircuits (l'état de veille demandé est, dans ce cas, supérieur à l'état de veille actuel).

Si l'état de veille demandé est inférieur ou égal à l'état de veille actuel, la commande mise en veille reçue est exécutée (étape 410).

Au contraire, si l'état de veille demandé est supérieur à l'état de veille actuel, un test est effectué pour déterminer la valeur de la variable d'état utilisée pour indiquer que des fonctions internes protégées sont susceptibles d'être affectées par une mise en veille d'un niveau supérieur à l'état de veille actuel (étape 415). Selon l'exemple donné précédemment, cette étape vise ici à déterminer la valeur de la variable d'état *PIN_OK.*

Si la valeur de la variable d'état utilisée indique que des fonctions internes protégées ne sont pas susceptibles d'être affectées par une mise en veille d'un niveau supérieur à l'état de veille actuel, la commande de mise en veille reçue est exécutée (étape 410).

Au contraire, si la valeur de la variable d'état utilisée indique que des fonctions internes protégées sont susceptibles d'être affectées par une mise en veille d'un niveau supérieur à l'état de veille actuel, un autre test est effectué pour déterminer si le niveau de veille demandé affecte l'exécution d'une fonction interne protégée (étape 420), par exemple si l'état de veille demandé a pour objet d'inhiber la fonction de décompte ou la fonction *timer* (si elles sont différentes). Dans l'affirmative, les deux dernières étapes (étapes 415 et 420) sont répétées pour différer l'exécution de la commande de mise en veille détectée.

En variante, l'interruption générée par la fonction *timer* peut être utilisée pour déclencher une fonction, de préférence logicielle, de mise à jour de la variable d'état *PIN_OK,* cette fonction de mise à jour comprenant une fonction de gestion de veille. Ainsi, si une commande de mise en veille a été préalablement détectée, c'est-à-dire si une veille est en attente, la carte à microcircuits est mise en veille lors de cette interruption, suite à la mise à jour de la variable d'état *PIN_OK.*

Au contraire, si le niveau de veille demandé n'affecte pas l'exécution d'une fonction interne protégée, la commande de mise en veille détectée est exécutée (étape 410).

La valeur de la variable d'état utilisée peut être mémorisée dans une mémoire volatile ou non volatile selon les niveaux de veille des cartes à microcircuits de telle sorte que cette valeur soit accessible dans l'état de veille le plus élevé selon lequel une fonction interne protégée peut être exécutée. Il est observé ici qu'il peut être possible de modifier l'état de veille (passer à un état de veille d'un niveau inférieur) pour changer la valeur d'une variable d'état.

Selon un mode de réalisation particulier, l'exécution des commandes de mise en veille peut être contrôlée par les fonctions internes protégées qui gèrent les variables d'état relatives à ces dernières ou par les applications protégées qui font appel à ces fonctions internes protégées. Selon ce mode de réalisation, les fonctions internes protégées ou les applications protégées, après avoir reçu une indication selon laquelle une commande de mise en veille a été détectée, indiquent au module de gestion de mise en veille l'instant auquel les commandes de mise en veille peuvent être exécutées.

Selon un autre mode de réalisation, une fonction interne protégée embarquée dans une carte à microcircuits est relative à une fonction de gestion de la mémoire de la carte. Il peut notamment s'agir d'une fonction appelée *« wear leveling* ».

Il est rappelé ici que les mémoires utilisées dans les cartes à microcircuits comprennent généralement des mémoires de type EEPROM (sigle d'*Electrically-Erasable Programmable Read-Only Memory* en terminologie anglo-saxonne) qui ont typiquement un nombre limité de cycles d'écritures, par exemple 20 ou 100 millions d'écritures. Or, certaines zones de mémoires sont généralement accédées, en écriture, plus souvent que d'autres. Ainsi, pour éviter une péremption prématurée d'une carte à microcircuits (liée à l'impossibilité d'écrire dans certaines zones de mémoire), une fonction de déplacement de données entre zones de mémoire est mise en oeuvre afin de répartir aussi uniformément que possible les opérations d'écritures. Cette fonction de gestion de la mémoire est communément appelée *wear leveling.*

Une telle fonction interne peut être mise en oeuvre parallèlement à l'exécution d'applications appelées par un utilisateur, pouvant conduire à une baisse de performance des cartes à microcircuits. Elles peuvent également être mises en oeuvre lorsque les cartes à microcircuits sont inutilisées. Dans ce cas, la mise en veille ultérieure de certains composants des cartes à microcircuits, notamment des composants en charge des opérations de lecture et d'écriture peut conduire, par exemple, à des pertes de données. Il est donc nécessaire de prévoir un mécanisme de prévention de perte de données en cas de mise en veille des cartes à microcircuits.

Ce problème est avantageusement résolu par l'invention. Selon un mode de réalisation particulier, une première indication est transmise au système d'exploitation de la carte d'identification, ou plus généralement à un module de gestion de mise en veille, lorsque la fonction de *wear leveling* est activée. De même, une seconde indication est transmise au système d'exploitation de la carte d'identification, ou plus généralement à un module de gestion de mise en veille, lorsque l'exécution de la fonction de *wear leveling* est terminée. Ainsi, connaissant l'état de la fonction de *wear leveling,* le système d'exploitation, ou plus généralement à un module de gestion de mise en veille, peut interdire l'état de veille totale de la carte à microcircuits lorsque la fonction de *wearleveling* est active. Alternativement, il peut être interdit de changer l'état de la carte à microcircuits lorsque la fonction de *wear leveling* est active. A ces fins, une variable d'état, par exemple la variable d'état *WL_OK,* est mise à une première valeur lorsque la fonction de *wear leveling* est activée (par exemple, *WL_OK=1*). Cette variable d'état est mise à une seconde valeur lorsque l'exécution de la fonction de *wear leveling* est terminée (par exemple, *WL_OK=0*).

Le module de gestion de mise en veille est alors similaire à celui décrit en référence à la figure 4, la variable d'état *PIN_OK* étant remplacée par la variable d'état *WL_OK.* De façon avantageuse, une même variable d'état, par exemple *VEILLE_OK,* est utilisée pour contrôler l'exécution de fonctions internes protégées afin que des commandes de mise en veille soient, le cas échéant, différées.

Comme décrit précédemment, les algorithmes décrits ci-avant, notamment les algorithmes décrits en référence aux figures 3 et 4, sont avantageusement mis en oeuvre dans une carte à microcircuits, par exemple une carte d'identification d'un souscripteur à un réseau de téléphonie mobile telle qu'une carte SIM.

Naturellement, pour satisfaire des besoins spécifiques, une personne compétente dans le domaine de l'invention pourra appliquer des modifications dans la description précédente.

## Revendications

1. Procédé de contrôle d'exécution d'au moins une fonction interne protégée embarquée dans un dispositif à microcircuits (150) adapté à être utilisé en coopération avec un terminal mobile (100), ce procédé étant **caractérisé en ce qu'**il est mis en oeuvre dans ledit dispositif à microcircuits et **en ce qu'**il comprend les étapes suivantes,
- détection (400) d'une commande de mise en veille dudit dispositif à microcircuits, ladite commande de mise en veille étant détectée à partir d'une information reçue d'un terminal mobile dans lequel est connecté ledit dispositif à microcircuits ;
- analyse (415) d'au moins une indication relative à l'exécution de ladite au moins une fonction interne protégée ; et,
- si ladite au moins une fonction interne protégée est susceptible d'être affectée par l'exécution de ladite commande de mise en veille, exécution (410) différée de ladite commande de mise en veille.

2. Procédé selon la revendication 1 comprenant en outre les étapes suivantes,
- mise à une première valeur (325) d'une variable d'état lors du lancement de ladite au moins une fonction interne protégée ; et,
- mise à une seconde valeur (325) de ladite variable d'état lorsque l'exécution de ladite au moins une fonction interne protégée est terminée ou lorsque ladite fonction interne protégée est réinitialisée ;
ladite étape d'analyse comprenant une étape d'analyse de la valeur de ladite variable d'état.

3. Procédé selon la revendication 1 selon lequel l'exécution de ladite commande de mise en veille est contrôlée par ladite au moins une fonction interne protégée.

4. Procédé selon l'une quelconque des revendications 1 à 3 comprenant en outre une étape de comparaison (405) d'un niveau de veille demandé associé à ladite commande de mise en veille avec un état de veille dudit dispositif à microcircuits.

5. Procédé selon l'une quelconque des revendications 1 à 4, ledit dispositif à microcircuits ou ledit terminal mobile étant pourvu de moyens de communication sans fil à faible portée (130), ledit dispositif à microcircuit comprenant une application protégée embarquée faisant appel auxdits moyens de communication sans fil à faible portée et à ladite fonction interne protégée, ce procédé comprenant en outre les étapes suivantes,
- réception (315) d'une donnée d'authentification pour l'exécution de ladite application protégée, ladite donnée d'authentification étant reçue dudit terminal mobile ;
- comparaison (320) de ladite donnée d'authentification reçue avec au moins une donnée stockée dans ledit dispositif à microcircuits ;
- si ladite donnée d'authentification reçue correspond à ladite au moins une donnée stockée et si ladite application protégée est appelée, vérification (335) de la validité de ladite donnée d'authentification reçue selon au moins un critère défini dynamiquement dans ledit dispositif à microcircuits ; et,
- si ladite donnée d'authentification reçue est valide, exécution (340) de ladite application protégée.

6. Procédé selon la revendication 5 selon lequel ladite fonction interne protégée est une fonction de décompte, le procédé comprenant en outre, si ladite donnée d'authentification reçue correspond à ladite au moins une donnée stockée, une étape d'appel (325) à ladite fonction de décompte pour un délai d'une durée prédéterminée, ladite étape de vérification comprenant la vérification que ledit délai n'est pas écoulé.

7. Procédé selon la revendication 6 selon lequel ladite fonction de décompte est basée sur une horloge matérielle dudit dispositif à microcircuits.

8. Procédé selon l'une quelconque des revendications 5 à 7, le procédé comprenant en outre les étapes suivantes,
- réception d'au moins une information dudit terminal mobile auquel est connecté ledit dispositif à microcircuits pour informer qu'au moins une borne d'accès sans contact est accessible via lesdits moyens de communication sans fil à faible portée ;
- sélection (300) d'au moins ladite application protégée embarquée dans ledit dispositif à microcircuits en réponse à ladite au moins une information reçue et transmission d'au moins une référence à ladite au moins application sélectionnée audit terminal mobile ; et,
- réception d'au moins un identifiant d'une application, ledit identifiant correspondant à une référence à ladite application protégée embarquée.

9. Procédé selon l'une quelconque des revendications précédentes selon lequel ledit dispositif à microcircuits est une carte à microcircuits.

10. Programme d'ordinateur comprenant des instructions adaptées à la mise en oeuvre de chacune des étapes du procédé selon l'une quelconque des revendications précédentes lorsque ledit programme est exécuté sur un ordinateur.

11. Dispositif comprenant des moyens adaptés à la mise en oeuvre de chacune des étapes du procédé selon l'une quelconque des revendications 1 à 9.

12. Dispositif à microcircuits pour contrôler l'exécution d'au moins une fonction interne protégée embarquée dans ledit dispositif à microcircuits (150), ledit dispositif à microcircuits étant adapté à être utilisé en coopération avec un terminal mobile (100), ce dispositif étant **caractérisé en ce qu'**il comprend un microcontrôleur configuré pour mettre en oeuvre les étapes suivantes,
- détection (400) d'une commande de mise en veille dudit dispositif à microcircuits, ladite commande de mise en veille étant détectée à partir d'une information reçue d'un terminal mobile dans lequel est connecté ledit dispositif à microcircuit ;
- analyse (415) d'au moins une indication relative à l'exécution de ladite au moins une fonction interne protégée ; et,
- si ladite au moins une fonction interne protégée est susceptible d'être affectée par l'exécution de ladite commande de mise en veille, exécution (410) différée de ladite commande de mise en veille.

13. Dispositif selon la revendication 12 comprenant en outre au moins une mémoire configurée pour mémoriser au moins une donnée relative à ladite au moins une fonction interne protégée.

14. Dispositif selon la revendication 13 selon lequel ledit microcontrôleur est en outre configuré pour exécuter un algorithme de cryptographie protégeant ladite au moins une donnée relative à ladite au moins une fonction interne protégée.

15. Dispositif selon l'une quelconque des revendications 12, 13 et 14 selon lequel ledit microcontrôleur est en outre configuré pour exécuter un algorithme de protection matérielle d'au moins un composant dudit dispositif.

16. Carte d'identification d'un souscripteur à un réseau de téléphonie mobile comprenant le dispositif selon l'une quelconque des revendications 11 à 15.

17. Terminal mobile intégrant le dispositif selon l'une quelconque des revendications 11 à 15.

## Patentansprüche

1. Verfahren zur Ausführungskontrolle mindestens einer geschützten internen Funktion in einer Mikroschaltkreisvorrichtung (150), die angepasst ist, zusammen mit einem mobilen Endgerät (100) verwendet zu werden, wobei das Verfahren **dadurch gekennzeichnet ist, dass** es in dieser Mikrochipvorrichtung umgesetzt wird und dadurch, dass es die folgenden Schritte umfasst:
- Erfassen (400) eines Bereitschaftsaktivierungs-Steuersignals der Mikroschaltkreisvorrichtung, wobei das Bereitschaftsaktivierungs-Steuersignal mittels einer Information erfasst wird, die von einem mobilen Endgerät empfangen wird, mit dem die Mikroschaltkreisvorrichtung verbunden ist;
- Analysieren (415) mindestens einer Angabe in Bezug auf das Ausführen dieser mindestens einen geschützten internen Funktion; und
- wenn die mindestens eine geschützte interne Funktion anfällig ist, von der Ausführung des Bereitschaftsaktivierungs-Steuersignals beeinflusst zu werden, verzögerte Ausführung (410) des Bereitschaftsaktivierungs-Steuersignals.

2. Verfahren nach Anspruch 1, überdies umfassend die folgenden Schritte:
- Setzen auf einen ersten Wert (325) einer Zustandsvariablen beim Start der mindestens einen geschützten internen Funktion; und
- Setzen auf einen zweiten Wert (325) dieser Zustandsvariablen, wenn die Ausführung dieser mindestens einen geschützten internen Funktion beendet wird oder wenn diese geschützte interne Funktion reinitialisiert wird;
wobei dieser Analyseschritt einen Analyseschritt des Wertes der Zustandsvariablen umfasst.

3. Verfahren nach Anspruch 1, wobei das Ausführen des Bereitschaftsaktivierungs-Steuersignals von der mindestens einen geschützten internen Funktion gesteuert wird.

4. Verfahren nach einem der Ansprüche 1 bis 3, überdies umfassend den Schritt des Vergleichens (405) eines dem Bereitschaftsaktivierungs-Steuersignal zugeordneten angeforderten Bereitschaftsniveaus mit einer Bereitschaftsaktivierung des Mikroschaltkreisvorrichtung.

5. Verfahren nach einem der Ansprüche 1 bis 4, wobei die Mikroschaltkreisvorrichtung oder das mobile Endgerät mit drahtlosen Kommunikationsmitteln mit geringer Reichweite (130) versehen ist, wobei die Mikroschaltkreisvorrichtung eine eingebaute geschützte Anwendung umfasst, die die drahtlosen Kommunikationsmittel mit geringer Reichweite und die geschützte interne Funktion in Anspruch nimmt, wobei dieses Verfahren überdies die folgenden Schritte umfasst:
- Empfangen (315) eines Authentifizierungsdatensatzes für das Ausführen der geschützten Anwendung, wobei dieser Authentifizierungsdatensatz von dem mobilen Endgerät empfangen wird;
- Vergleichen (320) des empfangenen Authentifizierungsdatensatzes mit mindestens einem in der Mikroschaltkreisvorrichtung gespeicherten Datensatz,
- wenn der empfangene Authentifizierungsdatensatz dem mindestens einen gespeicherten Datensatz entspricht und wenn die geschützte Anwendung aufgerufen wird, Verifizieren (335) der Gültigkeit des empfangenen Authentifizierungsdatensatzes nach mindestens einem dynamisch in der Mikrochipvorrichtung bestimmten Kriterium, und
- wenn der empfangene Authentifizierungsdatensatz gültig ist, Ausführen (340) der geschützten Anwendung.

6. Verfahren nach Anspruch 5, wobei die geschützte interne Funktion eine Zählfunktion ist, wobei das Verfahren überdies, wenn der empfangene Authentifizierungsdatensatz dem mindestens einen gespeicherten Datensatz entspricht, einen Schritt des Aufrufens (325) der Zählfunktion über einen Zeitraum von festgelegter Dauer umfasst, wobei der Schritt des Verfizierens die Prüfung umfasst, dass dieser Zeitraum nicht abgelaufen ist.

7. Verfahren nach Anspruch 6, wobei die Zählfunktion auf einer Hardware-Uhr der Mikroschaltkreisvorrichtung basiert.

8. Verfahren nach einem der Ansprüche 5 bis 7, wobei das Verfahren überdies die folgenden Schritte umfasst:
- Empfangen mindestens einer Information von dem mobilen Endgerät, an das die Mikroschaltkreisvorrichtung angeschlossen ist, um zu übermitteln, dass mindestens eine kontaktlose Zugriffsverbindung über die drahtlosen Kommunikationsgeräte mit geringer Reichweite zugänglich ist;
- Auswählen (300) mindestens der geschützten Anwendung in der Mikroschaltkreisvorrichtung in Reaktion auf die mindestens eine empfangene Information und Übertragen mindestens einer Referenz an die mindestens eine ausgewählten Anwendung auf dem mobilen Endgerät, und
- Empfangen mindestens eines Identifikators einer Anwendung, wobei der Identifikator einer Referenz der mindestens einen geschützten, enthaltenen Anwendung entspricht.

9. Verfahren nach einem der vorhergehenden Ansprüche, wobei die Mikroschaltkreisvorrichtung eine Mikroschaltkreiskarte ist.

10. Computerprogramm, umfassend Befehle, die an die Umsetzung jedes der Verfahrensschritte angepasst sind, nach einem der vorhergehenden Ansprüche, wenn das Programm auf einem Computer ausgeführt wird.

11. Vorrichtung, umfassend Mittel, die für die Umsetzung von jedem der Verfahrensschritte angepasst sind, nach einem der Ansprüche 1 bis 9.

12. Mikroschaltkreisvorrichtung zum Steuern der Ausführung mindestens einer geschützten internen Funktion in der Mikrochipvorrichtung (150), wobei die Mikrochipvorrichtung angepasst ist, zusammen mit einem mobilen Endgerät (100) verwendet zu werden, wobei die Vorrichtung **dadurch gekennzeichnet ist, dass** sie einen Mikrocontroller umfasst, der ausgestaltet ist, die folgenden Schritte umzusetzen:
- Erfassen (400) eines Bereitschaftsaktivierungs-Steuersignals der Mikroschaltkreisvorrichtung, wobei das Bereitschaftsaktivierungs-Steuersignal mittels einer Information erfasst wird, die von einem mobilen Endgerät empfangenen wird, mit dem die Mikroschaltkreisvorrichtung verbunden ist;
- Analysieren (415) mindestens einer Angabe in Bezug auf das Ausführen dieser mindestens einen geschützten internen Funktion; und
- wenn die mindestens eine geschützte interne Funktion anfällig ist, von der Ausführung des Bereitschaftsaktivierungs-Steuersignals beeinflusst zu werden, verzögerte Ausführung (410) des Bereitschaftsaktivierungs-Steuersignals.

13. Vorrichtung nach Anspruch 12, umfassend überdies mindestens einen Speicher, der ausgestaltet ist, mindestens einen Datensatz in Bezug auf die mindestens eine geschützte interne Funktion zu speichern.

14. Vorrichtung nach Anspruch 13, wobei der Mikrocontroller überdies ausgestaltet ist, einen Verschlüsselungsalgorithmus auszuführen, der den mindestens einen Datensatz in Bezug auf die mindestens eine geschützte interne Funktion schützt.

15. Vorrichtung nach einem der Ansprüche 12, 13 und 14, wobei der Mikrocontroller überdies ausgestaltet ist, einen Algorithmus zum materiellen Schutz mindestens eines Bauteils der Vorrichtung auszuführen.

16. Identifizierungskarte eines Teilnehmers eines Mobilfunknetzes, umfassend die Vorrichtung nach einem der Ansprüche 11 bis 15.

17. Mobiles Endgerät, das die Vorrichtung nach einem der Ansprüche 11 bis 15 integriert.

## Claims

1. A method for execution control of at least one protected internal function embedded in a microcircuit device (150) adapted to be used in cooperation with a mobile terminal (100), this method being **characterized in that** it is implemented in said microcircuit device and **in that** it comprises the following steps,
- detecting (400) a command for placing said microcircuit device on standby, said command for placing on standby being detected on the basis of an item of information received from a mobile terminal into which is connected said microcircuit device;
- analyzing (415) at least one indication relative to the execution of said at least one protected internal function; and,
- if said at least one protected internal function is liable to be affected by the execution of said command for placing on standby, deferring execution (410) of said command for placing on standby.

2. A method according to claim 1, further comprising the following steps,
- setting a state variable to a first value (325)on launching said at least one protected internal function; and,
- setting said state variable to a second value (325) when the execution of said at least one protected internal function has terminated or when said protected internal function is reinitialized;
said analyzing step comprising a step of analyzing the value of said state variable.

3. A method according to claim 1, in which the execution of said command for placing on standby is controlled by said at least one protected internal function.

4. A method according to any one of claims 1 to 3, further comprising a step (405) of comparing a level of standby requested associated with said command for placing on standby with a standby state of said microcircuit device.

5. A method according to any one of claims 1 to 4, said microcircuit device or said mobile terminal being provided with short-range wireless communication means (130), said microcircuit device comprising an embedded protected application making use of said short-range wireless communication means and of said protected internal function, the method further comprising the following steps,
- receiving (315) an item of authentication data for the execution of said protected application, said item of authentication data being received from said mobile terminal;
- comparing (320) said received item of authentication data with at least one item of data stored in said microcircuit device;
- if said received item of authentication data corresponds to said at least one stored item of data and if said protected application is invoked, verifying (335) the validity of said received item of authentication data according to at least one criterion dynamically defined in said microcircuit device; and
- if said received item of authentication data is valid, executing (340) said protected application.

6. A method according to claim 5, in which said protected internal function is a countdown function, the method further comprising, if said received item of authentication data corresponds to said at least one stored item of data, a step (325) of invoking said countdown function for a predetermined time, said verifying step comprising verifying that said time has not run out.

7. A method according to claim 6, in which said countdown function is based on a hardware clock of said microcircuit device.

8. A method according to any one of claims 5 to 7, the method further comprising the following steps,
- receiving at least one item of information from said mobile terminal to which said microcircuit device is connected, to indicate that at least one contactless access station is accessible via said short-range wireless communication means;
- selecting (300) at least said protected application embedded in said microcircuit device in response to said at least one received item of information and sending at least one reference to said at least one selected application to said mobile terminal; and,
- receiving at least one identifier of an application, said identifier corresponding to a reference to said embedded protected application.

9. A method according to any one of the preceding claims in which said microcircuit device is a microcircuit card.

10. A computer program comprising instructions adapted for the carrying out of each of the steps of the method according to any one of the preceding claims when said program is executed on a computer.

11. A device comprising means adapted for the implementation of each of the steps of the method according to any one of claims 1 to 9.

12. A microcircuit device for execution control of at least one protected internal function embedded in said microcircuit device (150), said microcircuit device being adapted to be used in cooperation with a mobile terminal (100), this device being **characterized in that** it comprises a microcontroller configured to implement the following steps,
- detecting (400) a command for placing said microcircuit device on standby, said command for placing on standby being detected on the basis of an item of information received from a mobile terminal into which is connected said microcircuit device;
- analyzing (415) at least one indication relative to the execution of said at least one protected internal function; and,
- if said at least one protected internal function is liable to be affected by the execution of said command for placing on standby, deferring execution (410) of said command for placing on standby.

13. A device according to claim 12, further comprising at least one memory configured to store at least one item of data relative to said at least one protected internal function.

14. A device according to claim 13 in which said microcontroller is furthermore configured for executing a cryptography algorithm protecting said at least one item of data relative to said at least one protected internal function.

15. A device according to any one of claims 12, 13 and 14 in which said microcontroller is furthermore configured for executing an algorithm for hardware protection of at least one component of said device.

16. An identification card of a subscriber to a mobile telephone network comprising the device according to any one of claims 11 to 15.

17. A mobile terminal integrating the device according to any one of claims 11 to 15.
